Europäisches Patentamt

European Patent Office

Office européen des brevets

(19)

(11) Publication number: **0 401 757**
**A2**

# (12) EUROPEAN PATENT APPLICATION

(21) Application number: **90110625.2**

(22) Date of filing: **05.06.90**

(51) Int. Cl.5: **G01P 3/489**

(30) Priority: **02.06.89 JP 141817/89**

(43) Date of publication of application:
**12.12.90 Bulletin 90/50**

(84) Designated Contracting States:
**DE FR GB**

(71) Applicant: **MITSUBISHI DENKI KABUSHIKI KAISHA**
**2-3, Marunouchi 2-chome Chiyoda-ku**
**Tokyo(JP)**

(72) Inventor: **Kashihara, Masanobu, Himeji Seisakusho**
**Mitsubishi Denki K.K., 840 Chiyoda-cho**
**Himeji-shi, Hyogo-ken(JP)**

(74) Representative: **Pfenning, Meinig & Partner**
**Mozartstrasse 17**
**D-8000 München 2(DE)**

(54) Method of detecting the number of revolutions.

(57) A method of detecting the number of revolutions wherein a pulse generator is used and when the pulse interval of pulses produced by the pulse generator becomes longer, an estimated value of revolutions is derived from a table in accordance with the lapse of time from the preceding pulse.

EP 0 401 757 A2

## METHOD OF DETECTING THE NUMBER OF REVOLUTIONS

This invention relates to a method of detecting the number of revolutions of a driving unit, such as a motor, and particularly to a method of detecting the number of revolutions of the driver at a relatively low speed.

According to a method which has hitherto been proposed in the prior art, the number of revolutions of a motor is detected by connecting a pulse generator to the output shaft of the motor so that the number of revolutions of the motor is determined by measuring the interval of the generated pulses on the basis of the fact that the interval of the generated pulses is in inverse proportion to the number of revolutions of the motor.

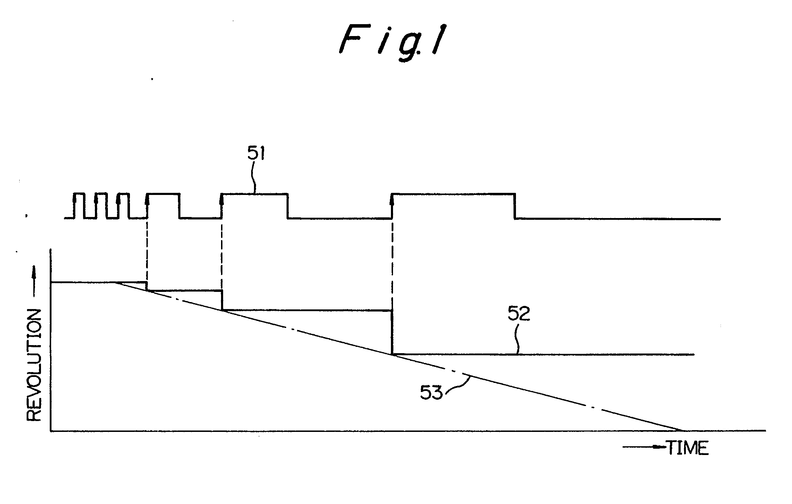

Such a prior art method will be described in more detail with reference to the time chart shown in Fig. 1 of the drawings. The pulse interval of the output signal 51 of the pulse generator gradually lengthens as the number of revolutions of the motor decreases. Since the detected value 52 of the number of revolutions is updated at each pulse interval, as the motor decreases in speed, the error of the detected number 52 of the revolutions relative to the true number 53 of the revolutions of the motor becomes large. When the motor is stopped, the output signal 51 of the pulse generator remains unchanged and this results in no updating of the detected number 52 of revolutions resulting in an error of detection, thereby not providing a correct determination of the true number 53 of revolutions of the motor. If a relatively large number of pulses is generated every one revolution, the precision of detection may be improved even at a low rotating speed. In such a case, however, the frequency of the pulses at a high rotating speed would be increased to require a pulse input circuitry of high-speed responsiveness and sensitivity, which characteristics lead to the tendency of being adversely affected by noise.

In view of the above problems, the object of the present invention is to provide a method of precisely detecting in a simple manner the number of revolutions at a relatively low speed.

According to the present invention, there is provided a method of detecting the number of revolutions of a driver, such as a motor, by using a pulse generator for detecting the number of revolutions of the driver, and providing an output signal as a revolution detecting signal in accordance with the lapse of time of a timer activated by the output signal of the pulse generator, even when the pulse interval of the pulse generator becomes longer and no pulse signal is produced.

With such an arrangement, when the rotation of the motor becomes lower and the pulse interval of the pulse generator becomes longer, an output signal is produced as a revolution detecting signal by deriving the number of revolutions from a table in accordance with the lapse of time of the timer activated by the pulse signal of the generator, even if a pulse is no longer generated by the pulse generator.

For a better understanding of the invention, reference is made to the accompanying drawings, in which:

Fig. 1 is a time chart of a conventional method of detecting the number of revolutions;

Fig. 2 is a block diagram of a circuit for carrying out the method of detecting the number of revolutions according to an embodiment of the present invention;

Fig. 3 is a time chart of the embodiment of the method of the present invention; and

Fig. 4 is a flowchart showing the operation of the method of the present invention.

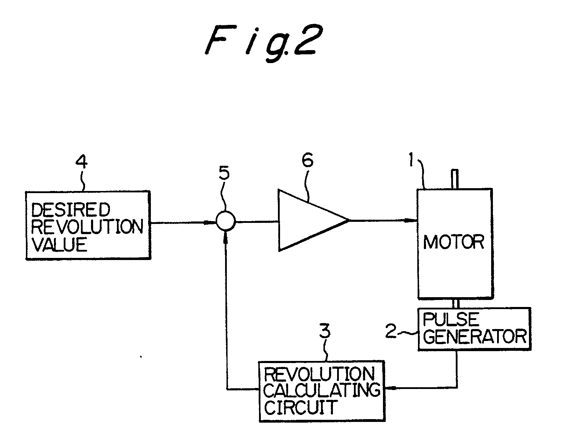

Referring now to Fig. 2, there is shown a block diagram of a circuit for carrying out the method of detecting the number of revolutions in accordance with the present invention. In Fig. 2, a motor 1 is used as a driver and a pulse generator 2 is connected to the motor 1 for producing pulses as a function of the number of revolutions thereof. A revolution calculating circuit 3 calculates the period of the pulses generated by the pulse generator 2. A desired value 4 of revolutions and the calculated revolution are added at a summing point 5 and then provided to an amplifier 6 so that a feedback control is carried out.

The detection of the number of revolutions of the motor 1 is achieved by a revolution calculating circuit 3 which detects the interval of the pulses generated by the pulse generator 2 and calculates the reciprocal number of the period to provide the number of revolutions. When the motor speed is reduced and the interval of the pulses of the pulse generator 2 becomes long, the revolution calculating circuit 3 derives the number of revolutions from a table (not shown) in accordance with the time lapse of a timer (not shown) triggered by the pulse generator 2 and produces an output signal as a detection signal for the number of revolutions. The table stores values of decrease in the number of revolutions corresponding to the lapse of times. Even if a pulse is no longer produced, the circuit 3 can provide the output signal.

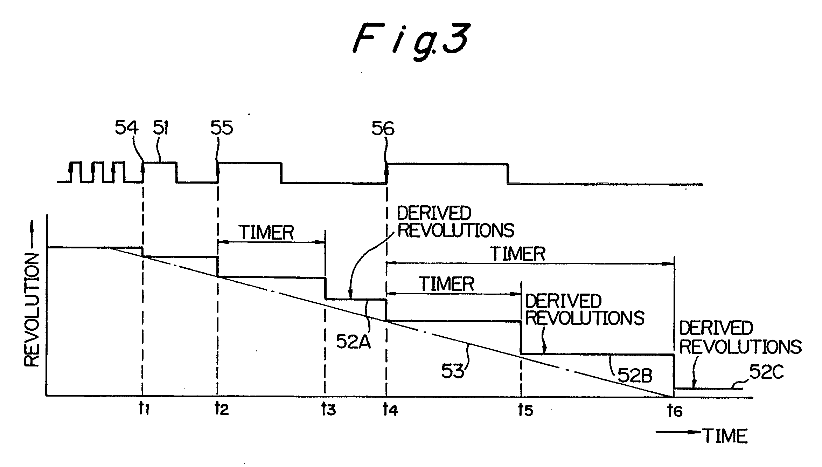

Fig. 3 is a time chart illustrating an example of the output of the revolution calculating circuit 3. When the number of revolutions decreases and arrives at a predetermined value, that is, a predetermined time period set by the timer has elapsed from a leading edge of the output signal 51 of the pulse generator, such as a time point $t_3$, the value of revolutions is derived from the table. The derived revolutions 52A - 52C substantially follow the actual number 53 of revolutions of the motor to reduce the error of detection. With the present invention, thus, in the case of detecting the number of revolutions of the motor using the pulse generator 2, in order to prevent the detection error of the rotation from being large, when the number of revolutions of the motor becomes low and the pulse interval increases and the timer clocks a predetermined time period from the leading edge of the pulses from the pulse generator 2, the value of revolutions is produced according to the lapse of time of the timer and outputted as a revolution detecting signal.

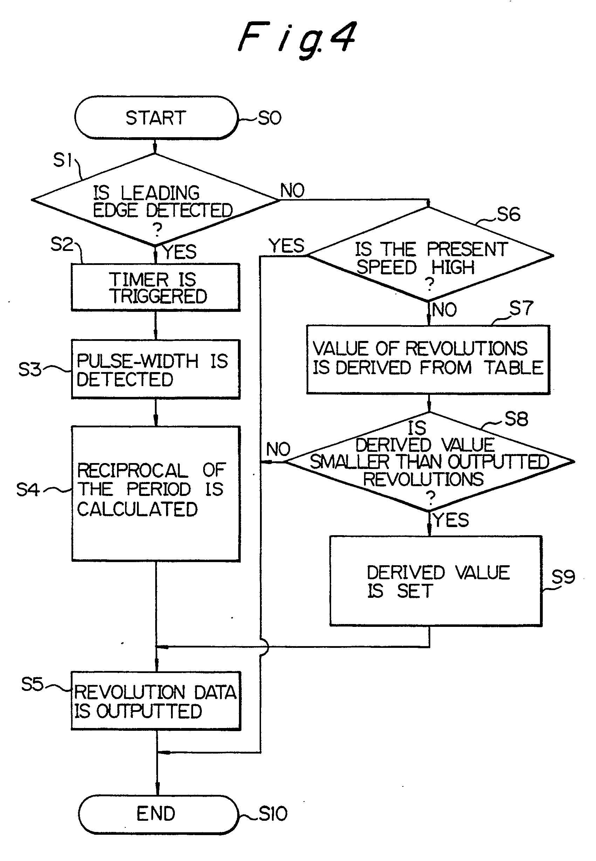

The method of detecting the number of revolutions will be described with reference to Fig. 3 and the flow chart shown in Fig. 4. First, when a leading edge of the pulses from the pulse generator 2 is detected (step S1), for example, edges 54, 55, 56, the timer is activated (step S2). Next, the pulse width is detected by counting the time period from the preceding pulse edge, for example, $t_2 - t_1$ (step S3), and the number of revolutions of the motor 1 is calculated from the reciprocal of that pulse width and then set in an outputable state (step S4). Subsequently, the set data of the number of revolutions is outputted (step S5). In the case where a leading edge of pulses is not detected for a predetermined time, it is determined whether the present revolutions are high or low in comparison to a predetermined value (step S6). If the number of revolutions is high such as the period $t_1 - t_2$, the operation proceeds to the end (step S10). If the number of revolutions is low such as the periods $t_2 - t_3$ and $t_4 - t_5$, the values 52A and 52B of revolutions are derived from the table in accordance with the lapse of time ($t_3 - t_2$ and $t_5 - t_4$) of the timer (step S7). Subsequently, if the table value is still smaller than the present number of revolutions which is being outputted (step S8), the value taken out from the table is set to be outputted as the number of revolutions (step S9) and then outputted at the data for the number of revolutions (step S5). If the table value is not smaller than the present number of revolutions, the processing proceeds to the end (step S10).

If a leading edge is still not detected (step S1) for a predetermined time from the preceding edge (56), the timer outputs an additional signal ($t_6$) and the value (52C) of revolutions is derived again from the table (step S7).

As described above, according to the present invention, even if the motor rotation is reduced and the interval of the pulses of the pulse generator becomes long and no pulse is generated, an output is produced as a signal of detection of the number of revolutions depending on the lapse of time of the timer, so that the number of revolutions at a relatively low speed can be detected by a simple and highly precise method.

Although the present invention is described with reference to a certain embodiment, it will be apparent to those skilled in the art that various alterations and modifications can be made within the scope of the invention.

## Claims

1. A method of detecting the number of revolutions of a driver, comprising the steps of detecting the number of revolutions of the driver by using a pulse generator, and providing an output as a signal for detecting the number of revolutions in accordance with the lapse of time of a timer triggered by leading edge of pulses of the pulse generator when the pulse interval of the pulses from the pulse generator becomes longer than a predetermined time period.

2. A method as set forth in Claim 1 wherein said driver is a motor.

3. A method as set forth in Claim 2 wherein said pulse generator produces pulses as a function of the number of revolutions of the motor.

4. A method as set forth in Claim 1 wherein said predetermined time period is determined by said timer.

Fig.1

EP 0 401 757 A2

# Fig.2

# Fig.3

EP 0 401 757 A2

EP 0 401 757 A2

# *Fig.4*

```
          ┌─────────────┐
          │   START     │──SO
          └─────────────┘
                 │
         S1    ╱─────────╲
             ╱ IS LEADING ╲      NO
            ╱ EDGE DETECTED ╲───────────────────┐
            ╲      ?        ╱                    │
             ╲─────────────╱                     │
                 │ YES                           │
         S2 ┌───────────┐         YES    ╱───────────────╲  S6
            │ TIMER IS  │        ┌──────╱ IS THE PRESENT  ╲
            │ TRIGGERED │        │      ╲  SPEED HIGH     ╱
            └───────────┘        │       ╲      ?        ╱
                 │               │        ╲─────────────╱
                 │               │              │ NO      S7
         S3 ┌───────────┐        │      ┌──────────────────────┐
            │PULSE-WIDTH│        │      │ VALUE OF REVOLUTIONS  │
            │ IS        │        │      │ IS DERIVED FROM TABLE │
            │ DETECTED  │        │      └──────────────────────┘
            └───────────┘        │              │
                 │               │      ╱───────────────────────╲ S8
         S4 ┌───────────┐        │ NO ╱    IS DERIVED VALUE      ╲
            │RECIPROCAL │        ├───╱ SMALLER THAN OUTPUTTED     ╲
            │OF THE     │        │   ╲      REVOLUTIONS           ╱
            │PERIOD IS  │        │    ╲          ?              ╱
            │CALCULATED │        │     ╲─────────────────────╱
            └───────────┘        │            │ YES
                 │               │      ┌──────────────┐
                 │               │      │ DERIVED VALUE│  S9
                 │               │      │   IS SET     │
                 │               │      └──────────────┘
                 │               │            │
                 └───────────────┴────────────┘
                 │
         S5 ┌─────────────────┐
            │ REVOLUTION DATA │
            │ IS OUTPUTTED    │
            └─────────────────┘
                 │
          ┌─────────────┐
          │    END      │──S10
          └─────────────┘
```